# EUROPEAN PATENT APPLICATION

(11) **EP 4 607 418 A1**
(43) Date of publication of application: **27.08.2025**
(21) Application number: 23878656.0
(22) Date of filing: 14.06.2023
(51) Int. Cl.: G06Q 10/04

(54) **METHOD AND SYSTEM FOR ANALYZING AND OPTIMIZING KEY PATH IN DEBUGGING STAGE OF NUCLEAR POWER UNIT**

(30) Priority: 20.10.2022 CN 202211289046
(71) Applicant: China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: HU, Jianhua, Shenzhen, Guangdong 518124 (CN); GUO, Donghui, Shenzhen, Guangdong 518124 (CN); WANG, Zhiming, Shenzhen, Guangdong 518124 (CN); WANG, Honglin, Shenzhen, Guangdong 518124 (CN); LU, Junyu, Shenzhen, Guangdong 518124 (CN); ZHOU, Yujia, Shenzhen, Guangdong 518124 (CN); GAO, Yuan, Shenzhen, Guangdong 518124 (CN); CHEN, Shiji, Shenzhen, Guangdong 518124 (CN); TIAN, Lichuang, Shenzhen, Guangdong 518124 (CN)
(74) Representative: Westphal, Mussgnug & Partner, Patentanwälte mbB
(86) International application number: PCT/CN2023/100269
(87) International publication number: WO 2024/082659

(57) **Abstract**

The invention relates to a method and a system for analyzing and optimizing the critical path in the commissioning phase of a nuclear power unit, which comprise the following steps of: determining a critical node of the critical path in the commissioning phase of the nuclear power unit; performing critical path analysis according to the critical node to obtain a critical path analysis result and performing critical path optimization according to the critical path analysis result to obtain an optimized critical path. According to the method, the critical node of the critical path in the commissioning phase of the nuclear power unit is analyzed and determined, the critical path is accurately identified, optimized and adjusted, and the optimal critical path can be obtained without taking an early unit as a reference, so that the orderly operation of a project is ensured.

## Description

### TECHNICAL FIELD

The present invention relates to the technical field of nuclear power plant commissioning, and more particularly, to a method and a system for analyzing and optimizing the critical path in the commissioning phase of a nuclear power unit.

### DESCRIPTION OF RELATED ART

The construction of PWR nuclear power plant is a large and complex system engineering, which is usually divided into four main phases: design, procurement, installation and commissioning. Commissioning is the phase to comprehensively verify whether the system and equipment performance meet the design requirements before the commercial operation of the unit, and is the phase to eliminate all kinds of defects in the project. At the same time, it is also the phase for production personnel to familiarize themselves with the unit and validate its operation procedures and other documents. Commissioning requires not only the professional skills similar to those of production line operation and maintenance departments, but also strict compliance with the requirements of unit standard operation, as well as the unique, temporary and uncertain characteristics of the project.

Generally, it takes about 62.5 months or even longer for a single unit to meet the commercial operation conditions from the commencement of the main project. The construction period of the commissioning phase generally accounts for about 1/4 of the total construction period of a single unit, and the peak period generally accounts for about 1/5. Due to the characteristics of centralized critical path, continuous release of problems left over from design, procurement and installation, and many uncertainties in the commissioning phase, the critical path schedule control in the commissioning phase is facing great difficulties.

The core purpose of the critical path schedule optimization in the commissioning phase is to obtain the optimal logical relationship and the shortest total duration by reducing the critical path operations, shortening the duration and optimizing the logical relationship under the premise of safety first, quality first and controllable cost.

The existing commissioning critical path management method is to copy the experience of the units in the early phase for management and control optimization, that is, on the basis of the operations executed by the units in the early phase, the optimal logical relationship and the shortest total duration are obtained by means of reducing the critical path operations, shortening the critical path duration and optimizing the critical path logical relationship.

However, the existing solution is required to be established on the basis of previous units for reference, that is, there are objects that can be copied. When facing a new type of nuclear power plant, there is no experience (that is, there is no object that can be copied) for reference. At this time, the critical path cannot be accurately identified, which leads to the failure to adjust and optimize the critical path in time. Thus affecting the commissioning process of the nuclear power plant and failing to achieve the optimal commissioning logic relationship and the shortest total construction period.

### BRIEF SUMMARY OF THE INVENTION

The technical problem to be solved by the present invention is to provide a method and a system for analyzing and optimizing the critical path in the commissioning phase of a nuclear power unit, in view of the defects in the prior art.

The technical solution adopted by the present invention to solve the technical problem is to construct a method for analyzing and optimizing the critical path in the commissioning phase of a nuclear power unit, which comprises the following steps:
Determining a critical node of the critical path in the commissioning phase of the nuclear power unit;
Performing critical path analysis according to the critical node to obtain a critical path analysis result;
Performing critical path optimization according to the critical path analysis result to obtain an optimized critical path.

In the method for analyzing and optimizing the critical path in the commissioning phase of a nuclear power unit according to the present invention, the step of performing critical path analysis according to the critical node to obtain a critical path analysis result comprises:
Analyzing the resources of the nuclear power unit in the commissioning process according to the critical node to obtain a core resource;
Performing requirement analysis based on the core resource to determine the requirement information of each task in the critical path for the core resources;
Performing logic mutual exclusion analysis according to the requirement information to obtain the critical path analysis result.

In the method for analyzing and optimizing the critical path in the commissioning phase of a nuclear power unit according to the present invention, the step of performing logic mutual exclusion analysis according to the requirement information to obtain the critical path analysis result comprises:
Determining exclusivity between tasks according to the requirement information;
Adjusting each task according to the exclusivity between tasks to obtain an initial critical path, where the initial critical path is the critical path analysis result.

In the method for analyzing and optimizing the critical path in the commissioning phase of a nuclear power unit according to the present invention, the step of performing critical path optimization according to the critical path analysis result to obtain an optimized critical path comprises:
Determining an initial critical path according to the critical path analysis result;
Performing logic coupling analysis on the initial critical path to obtain a logic coupling analysis result;

Performing optimization according to the logic coupling analysis result to obtain the optimized critical path.

In the method for analyzing and optimizing the critical path in the commissioning phase of a nuclear power unit according to the present invention, the step of performing optimization according to the logic coupling analysis result to obtain the optimized critical path comprises:
Obtaining critical tasks occupying same resource according to the logic coupling analysis result;
Coupling the critical tasks occupying same resource to obtain the optimized critical path.

In the method for analyzing and optimizing the critical path in the commissioning phase of a nuclear power unit according to the present invention, the step of performing critical path optimization according to the critical path analysis result to obtain an optimized critical path comprises:
Determining an initial critical path according to the critical path analysis result;
Performing space separation analysis on the initial critical path to obtain a space separation analysis result;

Performing optimization according to the space separation analysis result to obtain the optimized critical path.

In the method for analyzing and optimizing the critical path in the commissioning phase of a nuclear power unit according to the present invention, the step of performing optimization according to the space separation analysis result to obtain the optimized critical path comprises:
Obtaining the cross critical tasks according to the space separation analysis result, wherein the cross critical tasks comprise the critical tasks that do not occupy the same resource but have a conflict in space;
Performing space separation for the cross critical tasks, so that the cross critical tasks can be executed in parallel in the same window to obtain the optimized critical path.

In the method for analyzing and optimizing the critical path in the commissioning phase of a nuclear power unit according to the present invention, the step of performing critical path optimization according to the critical path analysis result to obtain the optimized critical path comprises:
Determining an initial critical path according to the critical path analysis result;
Performing temporary solution analysis on the initial critical path to obtain a temporary solution analysis result;
Performing optimization according to the temporary solution analysis result to obtain the optimized critical path.

In the method for analyzing and optimizing the critical path in the commissioning phase of a nuclear power unit according to the present invention, the step of performing optimization according to the temporary solution analysis result to obtain the optimized critical path comprises:
Determining the reason why a secondary critical task does not meet the resource requirement according to the temporary solution analysis result ;
Formulating a temporary solution according to the reason why the secondary critical task does not meet the resource requirement;
Coupling the secondary critical task based on the temporary solution to obtain the optimized critical path.

In the method for analyzing and optimizing the critical path in the commissioning phase of a nuclear power unit according to the present invention, the step of performing critical path optimization according to the critical path analysis result to obtain an optimized critical path comprises:
Determining an initial critical path according to the critical path analysis result;
Performing supplementary analysis on the initial critical path to obtain a supplementary analysis result;
Performing optimization according to the supplementary analysis result to obtain the optimized critical path.

In the method for analyzing and optimizing the critical path in the commissioning phase of a nuclear power unit according to the present invention, the step of performing optimization according to the supplementary analysis result to obtain the optimized critical path comprises:
Determining non-executable critical task in the initial critical path according to the supplementary analysis result;
Obtaining a subsequent critical task of the non-executable critical task;
Replacing the non-executable critical task by the subsequent critical task to obtain the optimized critical path.

In the method for analyzing and optimizing the critical path in the commissioning phase of a nuclear power unit according to the present invention, the step of performing critical path optimization according to the critical path analysis result to obtain an optimized critical path comprises:
Determining an initial critical path according to the critical path analysis result;
Performing risk analysis on the initial critical path to obtain a risk analysis result;
Performing optimization according to the risk analysis result to obtain the optimized critical path.

In the method for analyzing and optimizing the critical path in the commissioning phase of a nuclear power unit according to the present invention, the step of performing optimization according to the risk analysis result to obtain the optimized critical path comprises:
Determining risk level and retest probability of each critical task in the initial critical path according to the risk analysis results;
Performing optimization for the critical task in the initial critical path based on the risk level and the retest probability to obtain the optimized critical path.

The present invention also provides a system for analyzing and optimizing the critical path in the commissioning phase of a nuclear power unit, comprising:
a determination unit, configured to determine critical node of the critical path in the commissioning phase of the nuclear power unit;
An analysis unit, configured to perform critical path analysis according to the critical node to obtain the critical path analysis result;

An optimization unit, configured to perform critical path optimization according to the critical path analysis result to obtain an optimized critical path.

The present invention further provides a computer-readable storage medium storing a computer program, wherein the computer program is suitable for being loaded by a processor to execute the steps of the method for analyzing and optimizing the critical path in the commissioning phase of a nuclear power unit.

The present invention further provides a terminal, comprising a memory and a processor, wherein a computer program is stored in the memory, and the processor executes the steps of the method for analyzing and optimizing the critical path in the commissioning phase of a nuclear power unit by calling the computer program stored in the memory.

The implementation of the method for analyzing and optimizing the critical path in the commissioning phase of a nuclear power unit has the following beneficial effects: the method comprises the following steps of: determining a critical node of the critical path in the commissioning phase of the nuclear power unit; performing critical path analysis according to the critical node to obtain the critical path analysis result; and performing critical path optimization according to the critical path analysis result to obtain an optimized critical path. According to the method, the critical nodes of the critical path in the commissioning phase of the nuclear power unit are analyzed and determined, the critical path is accurately identified, optimized and adjusted, and the optimal critical path can be obtained without taking an early unit as a reference, so that the orderly operation of a project is ensured.

### BRIEF DESCRIPTION OF THE SEVERAL VIEWS OF THE DRAWINGS

The present invention will be further described with reference to the accompanying drawings and embodiments, in which:
FIG. 1 is a schematic flow chart of a method for analyzing and optimizing the critical path in the commissioning phase of a nuclear power unit according to an embodiment of the present invention;
FIG. 2 is a schematic structural diagram of a system for analyzing and optimizing the critical path in the commissioning phase of a nuclear power unit according to an embodiment of the present invention.

### DETAILED DESCRIPTION OF THE INVENTION

The technical solutions in the embodiments of the present invention will be clearly and completely described below in conjunction with the accompanying drawings of the embodiments of the present invention. Obviously, the described embodiments are only a part of the embodiments, but not all of them. Based on the embodiments of the present invention, all other embodiments obtained by those of ordinary skill in the art without creative task belong to the scope of protection of the present invention.

The present invention provides a method for analyzing and optimizing the critical path in the commissioning phase of a nuclear power plant unit, in order to ensure the coordinated and orderly operation of the project progress, the controlled state of the progress plan, and the optimal commissioning logic relationship and the shortest total construction period in the face of new reactor types, new units, and so on.

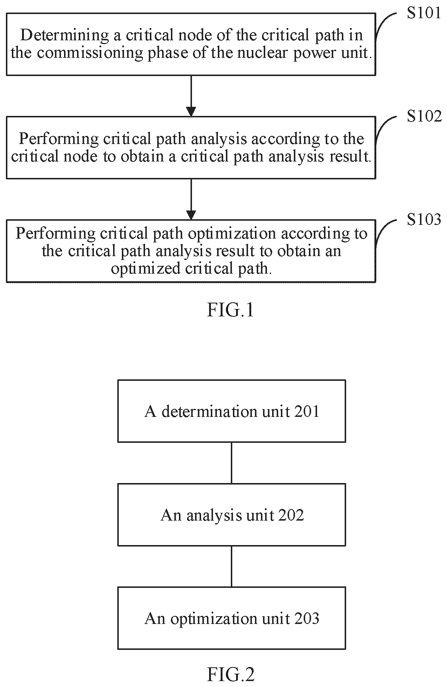

Referring to FIG. 1, it is a schematic flow chart of an optional embodiment of the method for analyzing and optimizing the critical path in the commissioning phase of a nuclear power unit provided by the present invention.

Specifically, as shown in FIG. 1, the method for analyzing and optimizing the critical path in the commissioning phase of a nuclear power unit includes the following steps:
Step S101: Determining a critical node of the critical path in the commissioning phase of the nuclear power unit.

Specifically, according to the characteristics of unit startup during the construction of nuclear power plants, The commissioning phase of nuclear power unit generally includes but is not limited to: NCC (Nuclear Circuit Cleaning), CFTRVO (Cold Functional Test Reactor Vessel Open), CFT (Cold Functional Test), CTT (Containment Test), HFT (Hot Functional Test), FCL (First Core Loading) criticality, impulse grid connection, commercial operation and other critical nodes. Among them, these critical nodes are transformed around the state of the primary reactor cavity, and other systems are served around these objectives, gradually making the unit have the conditions for commercial operation.

Step S102: Performing critical path analysis according to the critical node to obtain a critical path analysis result.

In some embodiments, performing critical path analysis according to the critical node to obtain a critical path analysis result includes: analyzing the resources of the nuclear power unit in the commissioning process according to the critical node to obtain a core resource; performing requirement analysis based on the core resource to determine the requirement information of each task in the critical path for the core resources; And performing logical mutual exclusion analysis according to that requirement information to obtain the critical path analysis result.

Specifically, for the analysis of the critical path, it is necessary to first analyze the core resource in the entire commissioning process, and then analyze the requirement information of each task in the critical path for the core resources, so as to define the demand window of each task. Wherein, the requirement information of each task for core resource includes an element and the main status of the element.

For example, the core resources of the reactor cavity and polar crane construction line are: polar crane, reactor pool, component pool, BRX (reactor building) 17.5m elevation and transport channel. By sorting out the core resources of the reactor cavity and polar crane construction line, further determine the requirement information for the polar crane, reactor pool, component pool, BRX (Reactor Building) 17.5m elevation and transport channel, and clarify its start and end time, and accurately define the task that must be completed at each stage and the task that can be supplemented; The optimal logical relationship and the shortest total construction period can be obtained by always ensuring the maximum utilization of the resources of the reactor cavity pool and the polar crane. Specifically, by evaluation and analysis, the core resources of each task in the use of reactor cavity and polar crane are mainly shown in Table 1 below.

**Table 1: Core Resource Analysis Table**

| S N. | category | Task | constructi on period (D) | un it | Sta rt | En d | polar crane | react or cavity | compon ent pool | 17.5 m | Affect ed nodes | notes |
|---|---|---|---|---|---|---|---|---|---|---|---|---|
| 1 | commission ing | NCC | 7 | ** | ** | ** | occasionally | long-term | short-term | no | NCC | Adjust the airbag to occupy the suspensi on ring |
| 2 | installation | Containm ent Isolation and NDT | 3 | ** | ** | ** | long-term | long-term | long-term | long term | CFT | |
| 3 | installation | Pre-CFT Core Loading | 5 | ** | ** | ** | long-term | long-term | long-term | no | CFT | |
| 4 | Civil | Gate Seal Test | 3 | ** | ** | ** | occasionally | long-term | long-term | no | loadin g | |

In some embodiments, performing logical mutual exclusion analysis according to the requirement information to obtain the critical path analysis result includes: determining exclusivity between tasks according to the requirement information; adjusting each task according to the exclusivity between the tasks to obtain an initial critical path, wherein the initial critical path is the critical path analysis result.

Specifically, after determining the requirement information of each task for the core resources such as the reactor cavity pool, the polar crane, and the piping, the initial critical path can be obtained by analyzing and determining the exclusivity between the tasks, and adjusting according to the exclusivity between the tasks. After determining the exclusivity between the tasks, the mutually exclusive tasks can be executed in series, and the non-mutually exclusive tasks can be executed in parallel, so as to realize the adjustment of the tasks to obtain the initial critical path.

Optionally, in some embodiments, the critical path of the commissioning phase may consist of the following types of critical task:

Outstanding critical path activities during installation phase: such as reactor internals trial assembly, polar crane calibration, flow-induced vibration probe installation, pre-service inspection of reactor pressure vessel, RGL (rod control system) cable termination, etc.

Outstanding civil construction critical path activities: such as equipment hatch installation & commissioning, reactor pool hydrostatic pressure / gate seal test/ acid cleaning & passivation, containment dome & polar crane nuclear cleanliness, etc.

Commissioning critical path tests: such as PMC (nuclear fuel handling and storage system) dry and underwater test, NCC/CFTRVO test, CFT/HFT, containment pressure test, pre-criticality/criticality/power tests, etc.

Non-critical path outstanding activities from each stage: such as movable wall installation, EVR(containment continuous ventilation system) duct installation, reactor pool scale installation, etc.

Wherein, the exclusionary factors of each task in terms of the use of the reactor cavity and the polar crane are mainly shown in Table 2 below.

**Table 2: Exclusion Factor Analysis Table**

| core resource | element | main status of the element |
|---|---|---|
| reactor pool and component pool | reactor pressure vessel head | after head removal, pre-closure activities, post-closure activities |
| | water level | dry condition, hot leg lower water level, flange level, RPV full water level, pressurizer level, pool full level, etc |
| | upper/lower reactor internals | upper/lower internals interface requirements, component location status, storage rack specifications, in-vessel positioning, 17.5m platform temporary storage |
| | reactor pool gate | Installed or not installed |
| | Inflatable Seal Installation Locations | main pump nozzle seal, RPV nozzle seal etc |
| | Blind Flange Installation Locations | Hot leg, cold leg |
| | Shaft seal status | seal water on, seal water off |
| | Transfer path | whether the gate valve and blind flange are closed, and the tilting frame status |
| | support structure coordination | scaffolding necessity assessment, scaffold positioning standards |
| | Space Occupation Status | reactor pool only, reactor pool + components pool, components pool only, reactor pool spatial occupation classification include primary circuit occupation, lower pool region occupation, upper pool region occupation, full cavity occupation, etc |
| polar crane | impact on polar crane utilization flexibility | crane maintenance status, usage impact levels such as occasional use, frequent use, continuous use, etc |
| BRX transport channel | impact assessment on BRX transport channel | whether block, short-term block, long-term block, large component transport impact |
| BRX elevated space | BRX elevated space occupation | occupies 17.5m elevation, occupies dome space of 17.5m elevation and positioned directly above the reactor pool + component storage pool, and occupies the annular gallery |

Step S103: Performing critical path optimization according to the critical path analysis result to obtain an optimized critical path.

In some embodiments, the step of performing critical path optimization according to the critical path analysis result to obtain an optimized critical path includes: determining an initial critical path according to the critical path analysis result; performing logic coupling analysis on the initial critical path to obtain a logic coupling analysis result; and performing optimization according to the logic coupling analysis result to obtain the optimized critical path.

Wherein, the step of performing optimization according to the logic coupling analysis result to obtain the optimized critical path includes: obtaining critical tasks occupying the same resources according to the logic coupling analysis result; and coupling the critical tasks occupying the same resources to obtain the optimized critical path.

Specifically, when the initial critical path is determined, the critical tasks occupying the same resources are sorted out according to the requirement information of each critical task on core resources such as the reactor cavity and the polar crane, and these critical tasks are coupled to be arranged to be carried out in parallel in the same window, thereby effectively saving the total construction period, realizing the optimization of the critical path, and obtaining the optimized critical path. Understandably, logical coupling analysis is one of the ways to optimize the critical path. Through logical coupling analysis, the critical tasks occupying the same resource can be sorted out and coupled, and the critical path can be effectively shortened.

For example, NCC and CFTRVO of the first reactor of a unit are coupled:
By analyzing the test contents and test conditions of NCC/CFTRVO, from the two perspectives of test conditions and implementation logic, combined with the requirements of the reactor cavity, it is analyzed and demonstrated whether NCC and CFTRVO can be executed synchronously, and the preparation of early conditions, the window of defect elimination and the optimization of test logic are formulated. Ensure that the integration solution can be implemented when the requirement conditions are met, save the joint commissioning period, shorten the project commissioning period, and reduce the number of high-risk operations.

The coupling study of NCC/CFTRVO of the first reactor of a unit shows that RISi288DI-(cold leg injection bypass orifice plate) related to LHSI (low pressure safety injection) can be verified during cold leg injection flushing; The RISi282DI-orifice plate shall be installed after the piping where the orifice plate is located is subject to dynamic flushing. Therefore, during the LHSI small flow test, the piping shall be subject to dynamic flushing at the same time, and then the RISi282DI-orifice plate shall be installed and verified again.

The MHSI (Medium Pressure Safety Injection) related RISi468DI-Orifice plate can be verified when the medium pressure safety injection piping is flushed.

At the same time of NCC flushing, the critical tests TP-RIS-50 (low pressure safety injection pump flow test) and TP-RIS-51 (medium pressure safety injection pump flow test) of CFTRVO were synchronously executed by minor changes in the online mode, and the data of 8 corresponding orifice plates under various operating conditions were measured. The first adjustment was completed (21 orifice plates in total), and 17 measurement conditions were completed (each orifice plate was tested once before adjustment and once after adjustment), which saved 3 days for CFTRVO test in total.

For another example, the PMC underwater test is coupled with the reactor pool hydrostatic pressure test:
PMC underwater test is a task throughout the reactor building and fuel building, and the test scope covers the spent fuel storage pool, fuel transfer pool, reactor internals storage pool, reactor refueling pool and other areas. The reactor refueling pool belongs to the reactor cavity area, and the task that needs to occupy the reactor cavity area shall be the task of the primary critical path. At the same time, the reactor pool and component pool need to carry out static pressure test. Therefore, it is necessary to consider reducing the time of PMC underwater test and pool static pressure test occupying the reactor refueling pool as much as possible when optimizing the schedule. In order to optimize the time window of PMC underwater test and reactor pool hydrostatic pressure test, the requirements of both for core resources such as reactor cavity pool and components were analyzed. Analyzing how to couple the tasks with similar conditions is also one of the solutions of critical path optimization.

According to the content and process of PMC underwater test, the underwater test of PMC loading and unloading part needs to occupy the reactor pool and component pool, and occupy the lower components at the same time, with a construction period of about 14 days, while the reactor pool hydrostatic pressure test also needs to occupy the reactor pool and component pool, without occupying the lower components, with a construction period of 15 days; The two water level requirements are the same, and there is no mutual influence between the relevant operations in the test process; they can be coupled in a test window, which can save about 14 days.

In some embodiments, the step of performing critical path optimization according to the critical path analysis result to obtain an optimized critical path includes: determining an initial critical path according to the critical path analysis result, performing space separation analysis on the initial critical path to obtain a space separation analysis result, and performing optimization according to the space separation analysis result to obtain the optimized critical path.

Wherein, the step of performing optimization according to the space separation analysis result to obtain the optimized critical path includes: obtaining the cross critical tasks according to the space separation analysis result, wherein the cross critical tasks include: the critical task that do not occupy the same resource but have a conflict in space; performing space separation for the cross critical tasks so that the cross critical tasks can be executed in parallel in the same window to obtain the optimized critical path.

Understandably, space separation analysis is also one of the ways to optimize the critical path. Space separation analysis is to master the requirement information of core resources such as reactor cavity and polar crane for each critical task, sort out the critical task that do not occupy the same resource, but have conflicts in space and other resources, and then carry out the task in parallel in the same window through the space separation arrangement of the solution, so as to effectively save the total duration and obtain the optimized path.

For example, a partition optimization method for synchronously advancing the cavity partitioning and multiple main lines before the CTT:
During the preparation of CTT, the reactor cavity construction line is faced with the Open-Vessel Cold Functional Test, the Containment Dome Nuclear Cleanliness, the BRX Equipment Hatch Test, and the Flow-Induced Vibration (FIV) Probe Installation of the newly added first reactor test, and there is exclusion between the related tasks due to space resources. How to convert the exclusion task into parallel execution is also one of the methods of critical path optimization.

The Containment Dome Nuclear Cleanliness and BRX Equipment Hatch Test are the necessary tasks before CTT, and Open-Vessel Cold Functional Test and Flow-Induced Vibration (FIV) Probe Installation are the necessary tasks for hot test preparation. In order to ensure the shortest total construction period and maximize the utilization of reactor cavity and polar crane resources, all related task must be carried out. However, the Containment Dome Nuclear Cleanliness is related to the reactor cavity pool, the Flow-Induced Vibration (FIV) Probe Installation and the installation and commissioning of the BRX Equipment Hatch, and there is a risk of introducing foreign matter into the reactor pool and the component pool. Generally, it can only be connected with the CFTRVO test and the welding of the flow-induced vibration instrument. Because of the drainage path conflict between the gate disconnection of BRX Equipment Hatch and the CFTRVO test, the installation of flow-induced vibration probe needs to occupy the component pool for welding of related instruments, and the CFTRVO test needs to occupy the reactor pool. The total construction period of Containment Dome Nuclear Cleanliness (including scaffold erection) is 26 days, the construction period of flow-induced vibration instrument welding and commissioning is 55 days, the Open-Vessel Cold Functional Test needs about 40 days, and the BRX Equipment Hatch Test needs about 60 days. If all these serial, it is far from achieving the goal of CTT and hot test conditions at the scheduled time.

Therefore, according to the relevant conditions, required resources and existing contradictions, it is proposed to set up hard protection in the reactor cavity pool and the component pool, add three layers of fine mesh protection measures on the top to realize the upper and lower division of the reactor cavity, use flashboard to realize the division of the reactor pool and the component pool, realize the Open-Vessel Cold Functional Test, and installation and commissioning of the flow-induced vibration probe of the component pool. The reactor cavity upper dome and polar crane nuclear cleanliness and the integrated installation and commissioning of BRX 17.5m equipment hatch with quad-stream (land/sea/air/underground) synchronization so as to achieve the optimal total construction period. The reactor cavity construction line was withdrawn from the critical path, saving about 26 days on the critical path.

In some embodiments, performing critical path optimization according to the critical path analysis result to obtain an optimized critical path includes: determining an initial critical path according to the critical path analysis result, performing temporary solution analysis on the initial critical path to obtain a temporary solution analysis result, and performing optimization according to the temporary solution analysis result to obtain the optimized critical path.

Wherein, the step of performing optimization according to the temporary solution analysis result to obtain the optimized critical path, includes: determining the reason why the secondary critical task does not meet the resource requirement according to the temporary solution analysis result; formulating a temporary solution according to the reason why the secondary critical task does not meet the resource requirement; coupling the secondary critical task based on the temporary solution, to obtain the optimized critical path.

It is understandable that the temporary solution analysis is also one of the ways to optimize the critical path. Specifically, the temporary solution analysis is to sort out the conditions for meeting the core resource occupied by the critical task after determining the requirement information of the critical task for the core resource, and to analyze the reasons why the secondary critical task does not meet the resource requirement, so as to couple the temporary solution for the secondary critical task, ensure the maximum utilization of the core resource, and prevent secondary critical task from escalating to critical task. Or the critical task is delayed, so as to save the total construction period and realize the optimization of the critical path.

For example, some buildings of BNX (nuclear auxiliary building) cannot be used to participate in the cold test temporarily:
During the CFT preparation of a unit, due to the influence of civil engineering, the handover of BNX building was delayed, and the progress of the system line of REA (Reactor Boronation and Water Makeup System) of BNX building exceeded the reactor cavity construction line of the primary critical path, which tended to be the critical path and did not meet the requirements for the start of CFT. The research on the unusable cold test solution of some BNX building was carried out, and the requirements of REA system power supply and instrument control logic were realized through the temporary solution, and the cold test water source was solved, so that the cold test started on time.

Another example is the solution for temporary lifting main pump shaft t to meet the requirements of the reactor cavity construction line.

During the preparation of CFT of a unit, the reactor cavity construction line and the main pump construction line could not be matched. In order to clean the relevant piping of the primary loop, the reactor cavity construction line was planned to flush the relevant piping of the primary loop before the CFT. The flushing required the main pump to be connected to the shaft and the shaft seal to be put into operation. The main pump to be connected to the shaft was generally carried out after the end of the no-load of the main pump motor. The actual situation of a unit is that the flushing before stacking is carried out on April 26, XXX 1, while the main pump motor is expected to complete no-load on May 13, XXX 2, with a progress deviation of 17 days.

According to the schedule of a unit, the feasibility of temporary shaft coupling for main pump was studied and analyzed. After the shaft seal piping was flushed, the main pump was temporary shaft coupling to meet the flushing requirements before the reactor cavity construction line was loaded. During the reactor cavity flushing process, the jacking oil pump test, TP08/09 instrument and logic test were synchronously carried out before the main pump motor started. When the flushing of the reactor cavity is completed, the main pump is off the shaft and subjected to a motor no-load test by the analysis of the temporary shaft coupling solution, the 17-day progress difference between the two lines was digested to ensure that the original critical path was implemented as planned.

In some embodiments, the step of performing critical path optimization according to the critical path analysis result to obtain an optimized critical path includes: determining an initial critical path according to the critical path analysis result, performing supplementary analysis on the initial critical path to obtain a supplementary analysis result, and performing optimization according to the supplementary analysis result to obtain the optimized critical path.

Wherein, the step of performing optimization according to the supplementary analysis result to obtain the optimized critical path includes: determining the non-executable critical task in the initial critical path based on the supplementary analysis result; obtaining a subsequent critical task of the non-executable critical task; and replacing the non-executable critical task with the subsequent critical task to obtain the optimized critical path.

Understandably, the analysis of supplementary solution is also one of the ways of critical path optimization. Specifically, in the process of executing the critical path in the commissioning phase of the nuclear power plant, not all of the critical paths can be executed smoothly. When the critical path encounters defects and cannot be executed, the supplementary solution analysis is also one of the important solutions to ensure the critical path.

Wherein, the analysis of supplementary solution is to sort out the impact of critical task on future task after grasping the requirement information of critical task for core resources, to clarify whether the critical task is the only window or the multi-window task, and to give priority to the only window critical path task when the plan is implemented, but the secondary critical path is for some reason. It is necessary to analyze and consider the coupling of critical task with temporary solution to ensure the maximum utilization of core resource and avoid the secondary critical path to be the critical path or the delay of the critical path, so as to effectively save the total construction period.

For example, during the PMC and CTT tests, the period from NCC to FCL was supplemented.

The dry test and underwater test of PMC refueling machine shall be completed before loading according to the unit startup requirements. However, if the PMC01 subsystem can be handed over before and after NCC, the dry test can be completed before the cold test, and the underwater test can be completed during the hot test preparation.

CTT is absolutely "exclusive" to the rest of the task in the BRX, so it is the primary critical path during the construction of the project. Under normal circumstances, no matter how the window of CTT is arranged, it has no effect on the total construction period in theory. However, when there is a significant delay in the secondary critical path task outside the reactor building, which eventually leads to an indigestible delay in a reactor cavity or polar crane task (the total time difference is negative), the total duration can be saved by using the supplementary arrangement of the CTT window.

In some embodiments, the step of performing critical path optimization according to the critical path analysis result to obtain an optimized critical path includes: determining an initial critical path according to the critical path analysis result, performing risk analysis on the initial critical path to obtain a risk analysis result, and performing optimization according to the risk analysis result to obtain the optimized critical path.

Wherein, the step of performing optimization according to the risk analysis result to obtain the optimized critical path includes: determining risk level and retest probability for each critical task in the initial critical path according to the risk analysis result; performing optimization for the critical task in the initial critical path based on the risk level and the retest probability to obtain the optimized critical path.

Understandably, the analysis of supplementary solution is also one of the ways of critical path optimization. Specifically, the risk analysis is to master the characteristics of the core resource requirements of each critical path task, sort out the risk existing in the execution process of the critical path task and the probability of retest, give priority to the execution of tests with higher risk, and continue to execute other critical path task during the defect processing period, so as to gain time for defect processing, ensure the maximum utilization of core resource and save the total duration.

For example, in the execution stage of the Open-Vessel Cold Functional Test of Unit 3#, there are external constraints such as the transformation of the instrument control DCS (data acquisition system) and the shutdown transformation of the electrical panel. At the same time, some tests have the risk of repeated tests, test failure and water pollution; Identify the risk and characteristics of each type of test through the list of Open-Vessel Cold Functional Test, and give priority to the test with high probability of retest. The test that pollutes the water source and affects other water source is arranged later. The test that occupies window in a longer time is between the first priority and the third priority. Wherein, the priority is planned as follows:
The first priority: TP-RIS-11 \ 12 \ 50 \ 51 is affected by orifice plate, and the risk of nonconformity is high.

The second priority: TP-RCV-50 involves valve PID regulation, and the test takes a long time. Where RCV is the chemical and volume control system.

The third priority: the reactor pool test of PTR (Reactor and Spent Fuel Pool Cooling and Treatment System). The cleanliness of the water in the reactor pool is greatly affected by the site environment, and there is a risk of polluting the water quality when it is discharged to IRWST (In-Containment Refueling Water Storage Tank).

At the same time, identify the requirements of each subsection test for DCS and electrical panel, screen out the DCS and electrical panel that do not affect the current test, and carry out DCS transformation and shutdown arrangement alternately.

FIG. 2 is a schematic structural diagram of an optional embodiment of the system for analyzing and optimizing the critical path in the commissioning phase of a nuclear power unit according to the present invention. The system for analyzing and optimizing the critical path in the commissioning phase of a nuclear power unit can be applied to the method for analyzing and optimizing the critical path in the commissioning phase of a nuclear power unit disclosed by the embodiment of the invention.

Specifically, as shown in FIG. 2, the system for analyzing and optimizing the critical path in the commissioning phase of a nuclear power unit includes:

A determination unit 201, for determining the critical node of the critical path in the commissioning phase of a nuclear power unit.

An analysis unit 202, for performing critical path analysis according to the critical node to obtain the critical path analysis result.

An optimization unit 203, for performing critical path optimization according to the critical path analysis result to obtain an optimized critical path.

The present invention also provides a computer-readable storage medium, in which a computer program is stored, and the computer program is suitable for being loaded by a processor to execute the steps of the method for analyzing and optimizing the critical path in the commissioning phase of a nuclear power unit disclosed in the embodiments of the present invention.

The present invention also provides a terminal, and the terminal includes a memory and a processor, wherein the memory stores a computer program, and the processor executes the steps of the method for analyzing and optimizing the critical path in the commissioning phase of a nuclear power unit disclosed in the embodiment of the present invention by calling the computer program stored in the memory.

Each embodiment in this specification is described in a progressive manner, and each embodiment focuses on the differences from other embodiments, and the same and similar parts of each embodiment can be referred to each other. For the device disclosed in the embodiment, since it corresponds to the method disclosed in the embodiment, the description is relatively simple, and related parts can be described in the method part.

Those skilled in the art will further appreciate that the elements and algorithm steps of the various examples described in connection with the embodiments disclosed herein can be implemented as electronic hardware, computer software, or a combination of both, and that the components and steps of the various examples have been described generally in terms of function in the foregoing description for the purpose of clearly illustrating the interchangeability of hardware and software. Whether these functions are implemented in hardware or software depends on the specific application and design constraints of the technical solution. Skilled artisans may implement the described functionality using different methods for each particular application, but such implementations should not be construed as exceeding the scope of the invention.

The steps of a method or algorithm described in connection with the embodiments disclosed herein may be embodied directly in hardware, in a software module executed by a processor, or in a combination of the two. The software module may be placed in a random access memory (RAM), a memory, a read only memory (ROM), an electrically programmable ROM, an electrically erasable programmable ROM, a register, a hard disk, a removable disk, a CD-ROM, or any other form of storage medium known in the art.

The above embodiments only illustrate the technical concepts and features of the present invention, and are intended to enable those skilled in the art to understand the contents of the present invention and implement it accordingly, and do not limit the scope of protection of the invention. All equivalent change and modifications accord to that scope of the appended claims are intended to be included in the scope of the appended claims.

## Claims

1. A method for analyzing and optimizing the critical path in the commissioning phase of a nuclear power unit, comprising the following steps:
determining a critical node of the critical path in the commissioning phase of a nuclear power unit;
performing critical path analysis according to the critical node to obtain the critical path analysis result;
and performing critical path optimization according to the critical path analysis result to obtain the optimize critical path.

2. The method for analyzing and optimizing the critical path in the commissioning phase of a nuclear power unit according to claim 1, wherein the step of performing critical path analysis according to the critical node to obtain a critical path analysis result comprises:
analyzing the resources of the nuclear power unit in the commissioning process according to the critical node to obtain a core resource;
performing requirement analysis based on the core resource to determine the requirement information of each task in the critical path for the core resources;
and performing logic mutual exclusion analysis according to the requirement information to obtain the critical path analysis result.

3. The method for analyzing and optimizing the critical path in the commissioning phase of a nuclear power unit according to claim 2, wherein the step of performing logic mutual exclusion analysis according to the requirement information to obtain the critical path analysis result comprises:
determining exclusivity between tasks based on the requirement information;
and adjusting each task according to the exclusivity between the tasks to obtain an initial critical path, wherein the initial critical path is the critical path analysis result.

4. The method for analyzing and optimizing the critical path in the commissioning phase of a nuclear power unit according to claim 1, wherein the step of performing critical path optimization according to the critical path analysis result to obtain an optimized critical path comprises:
determining an initial critical path according to the critical path analysis result;
performing logic coupling analysis on the initial critical path to obtain a logic couple analysis result;
and performing optimization according to the logic coupling analysis result to obtain the optimized critical path.

5. The method for analyzing and optimizing the critical path in the commissioning phase of a nuclear power unit according to claim 4, wherein the step of performing optimization according to the logic coupling analysis result to obtain the optimized critical path comprises:
obtaining critical tasks occupying same resource according to the logic coupling analysis result;
and coupling the critical tasks occupying same resource to obtain the optimized critical path.

6. The method for analyzing and optimizing the critical path in the commissioning phase of a nuclear power unit according to claim 1, wherein the step of performing critical path optimization according to the critical path analysis result to obtain an optimized critical path comprises:
determining an initial critical path according to the critical path analysis result;
performing space separation analysis on the initial critical path to obtain a space separation analysis result;
and performing optimization according to the space separation analysis result to obtain the optimize critical path.

7. The method for analyzing and optimizing the critical path in the commissioning phase of a nuclear power unit according to claim 6, wherein the step of performing optimization according to the space separation analysis result to obtain the optimized critical path comprises:
obtaining the cross critical tasks according to the space separation analysis result, wherein the cross critical tasks comprise the critical tasks which do not occupy the same resource but have a conflict in space;
and performing space separation for the cross critical tasks, so that the cross critical tasks can be executed in parallel in the same window to obtain the optimized critical path.

8. The method for analyzing and optimizing the critical path in the commissioning phase of a nuclear power unit according to claim 1, wherein the step of performing critical path optimization according to the critical path analysis result to obtain the optimized critical path comprises:
determining an initial critical path according to the critical path analysis result;
performing temporary solution analysis on the initial critical path to obtain a temporary solution analysis result;
and performing optimization according to the temporary solution analysis result to obtain the optimized critical path.

9. The method for analyzing and optimizing the critical path in the commissioning phase of a nuclear power unit according to claim 8, wherein the step of performing optimization according to the temporary solution analysis result to obtain the optimized critical path comprises:
determining the reason why a secondary critical task does not meet the resource requirement according to the temporary solution analysis result;
formulating a temporary solution according to the reason why the secondary critical task does not meet the resource requirement;
and coupling the secondary critical task based on the temporary solution to obtain the optimized critical path.

10. The method for analyzing and optimizing the critical path in the commissioning phase of a nuclear power unit according to claim 1, wherein the step of performing critical path optimization according to the critical path analysis result to obtain the optimized critical path comprises:
determining an initial critical path according to the critical path analysis result;
performing supplementary analysis on the initial critical path to obtain a supplementary analysis result;
and performing optimization according to the supplementary analysis result to obtain the optimized critical path.

11. The method for analyzing and optimizing the critical path in the commissioning phase of a nuclear power unit according to claim 10, wherein the step of performing optimization according to the supplementary analysis result to obtain the optimized critical path comprises:
determining non-executable critical task in the initial critical path according to the supplementary analysis result;
obtaining a subsequent critical task of the non-executable critical task;
and replacing the non-executable critical task by the subsequent critical task to obtain the optimized critical path.

12. The method for analyzing and optimizing the critical path in the commissioning phase of a nuclear power unit according to claim 1, wherein the step of performing critical path optimization according to the critical path analysis result to obtain an optimized critical path comprises:
determining an initial critical path according to the critical path analysis result;
performing risk analysis on the initial critical path to obtain a risk analysis result;
and performing optimization according to the risk analysis result to obtain the optimized critical path.

13. The method for analyzing and optimizing the critical path in the commissioning phase of a nuclear power unit according to claim 12, wherein the step of performing optimization according to the risk analysis result to obtain the optimized critical path comprises:
determining risk level and retest probability of each critical task in the initial critical path according to the risk analysis result;
and performing optimization for the critical task in the initial critical path based on the risk level and the retest probability to obtain the optimized critical path.

14. A system for analyzing and optimizing the critical path in the commissioning phase of a nuclear power unit, comprising:
a determination unit, configured to determine critical node of the critical path in the commissioning phase of the nuclear power unit;
an analysis unit, configured to perform critical path analysis accord to the critical node to obtain the critical path analysis result;
and an optimization unit, configured to perform critical path optimization according to the critical path analysis result to obtain the optimized critical path.

15. A computer readable storage medium, wherein the computer readable storage medium stores a computer program, and the computer program is suitable for being loaded by a processor to execute the steps of the method for analyzing and optimizing the critical path in the commissioning phase of a nuclear power unit according to any one of claims 1 to 13.

16. A terminal, comprising a memory and a processor, wherein the memory stores a computer program, and the processor calls the computer program stored in the memory to execute the steps of the method for analyzing and optimizing the critical path in the commissioning phase of a nuclear power unit according to any one of claims 1 to 13.
